# DEMANDE DE BREVET EUROPEEN

(11) **EP 3 369 784 A1**
(43) Date de publication de la demande: **05.09.2018**
(21) Numéro de dépôt: 17158998.9
(22) Date de dépôt: 02.03.2017
(51) Int. Cl.: C09C 1/00, C09C 1/62, A44C 1/00

(54) **PIGMENT INTERFERENCIEL BASÉ SUR UN COEUR MÉTALLIQUE CHOISI PARMIT L'AU, AG, PD, RH, RU, PT, OS, IR ET LEURS ALLIAGES**

(71) Demandeur: The Swatch Group Research and Development Ltd, 2074 Marin (CH)
(72) Inventeur: Bazin, Jean-Luc, 2512 Tüscherz-Alfermée (CH); Miko, Csilla, 1417 Essertines-sur-Yverdon (CH)
(74) Mandataire: Ravenel, Thierry Gérard Louis

(57) **Abrégé**

La présente invention se rapporte à un pigment interférentiel (1) multicouche comprenant successivement :
- un coeur métallique (2) sous forme d'une paillette, le coeur métallique (2) comprenant un matériau choisi parmi l'or, l'argent, le palladium, le rhodium, le ruthénium, le platine, l'osmium, l'iridium et un de leurs alliages ;
- une première couche (3) d'un matériau diélectrique transparent ;
- une deuxième couche (4) métallique.

## Description

### Domaine technique

La présente invention se rapporte à un nouveau pigment interférentiel avec un champ d'application plus particulier dans les domaines de l'horlogerie, de la bijouterie et des cosmétiques.

### Arrière-plan technologique

La création d'une palette de couleurs par interférence de la lumière réfléchie sur des structures multicouches est bien connue. On peut par exemple citer les documents EP 0 905 205 et US 6 626 989 qui divulguent des pigments perlés comprenant un coeur en mica enrobé d'une couche d'oxyde de titane.

Plus récemment, des pigments interférentiels avec un coeur métallique se sont répandus. Le choix du métal à coeur s'est principalement limité à l'aluminium. Bien que ce type de pigment présente déjà un aspect esthétique attractif, l'intensité et la brillance des couleurs interférentielles peuvent encore être améliorées en jouant entre autres sur les propriétés optiques du métal à coeur.

### Résumé de l'invention

La présente invention propose ainsi un nouveau pigment interférentiel qui permet d'améliorer l'aspect esthétique de la pièce le comportant.
A cette fin, un pigment, son utilisation et une pièce selon les revendications annexées sont proposés.
Plus précisément, la présente invention propose un pigment interférentiel multicouche comprenant successivement :
- un coeur métallique sous forme d'une paillette, le coeur métallique comprenant un matériau choisi parmi l'or, l'argent, le palladium, le rhodium, le ruthénium, le platine, l'osmium, l'iridium et un de leurs alliages ;
- une première couche d'un matériau diélectrique transparent ;
- une deuxième couche métallique.
Grâce à ce coeur métallique réalisé dans un métal précieux présentant un niveau de réflectance élevé, et de préférence supérieur à celui de l'aluminium, dans au moins une partie du spectre visible, les couleurs interférentielles gagnent en brillance et en intensité comparées à celles obtenues avec un pigment interférentiel conventionnel. Il en découle des pièces revêtues ou massives présentant un éclat particulier apprécié dans le domaine de l'horlogerie, de la bijouterie et des cosmétiques.

Selon des modes particuliers de l'invention, le pigment interférentiel présente une ou une combinaison appropriée des caractéristiques suivantes :
- le coeur métallique comprend un matériau choisi parmi l'or, l'argent, le rhodium et un de leurs alliages et, plus préférentiellement, choisi parmi l'or, l'argent et un de leurs alliages ;
- il comprend une troisième couche de protection formée d'un matériau diélectrique transparent ou d'une résine transparente ;
- le matériau diélectrique de la première couche et de la troisième couche est choisi parmi le TiO₂, SiO₂, Al₂O₃, MgF₂, AlN, Ta₂O₅, Si₃N₄ ZnS, ZnO, ZrO₂, Cr₂O₃, CeO₂, Y₂O₃, HfN, HfC, HfO₂, La₂O₃, MgO, Sb₂O₃, SiO, Se₂O₃, SnO₂ et le WO₃ ;
- la deuxième couche métallique comprend un matériau choisi parmi l'argent, l'or, l'aluminium, le titane, le palladium, le platine, le ruthénium, l'osmium, l'iridium, l'étain, le chrome, le fer, le cobalt, le nickel, le cuivre, le zinc, le rhodium et un de leurs alliages ;
- le coeur métallique a un diamètre transversal moyen compris entre 2 et 300 µm, de préférence entre 5 et 100 µm et plus préférentiellement entre 10 et 30 µm, et une épaisseur moyenne comprise 20 et 1000 nm et, de préférence, entre 300 et 500 nm ;
- la première couche a une épaisseur comprise entre 50 et 500 nm et, de préférence, entre 300 et 400 nm ;
- la deuxième couche et la troisième couche ont une épaisseur comprise entre 1 et 30 nm et, de préférence, entre 1 et 10 nm ;
- la deuxième couche est discontinue ;
- la deuxième couche se présente sous forme de particules disposées à intervalle.

La présente invention se rapporte également à une pièce et, en particulier à une pièce d'habillage, pour l'horlogerie ou la bijouterie comprenant des pigments interférentiels tels que décrits ci-dessus.

Selon des modes particuliers de l'invention, la pièce comporte un revêtement comprenant des pigments interférentiels ou comporte en masse des pigments interférentiels.

La présente invention se rapporte aussi à la montre ou au bijou comportant la pièce avec les pigments interférentiels.

Elle se rapporte également à l'utilisation des pigments interférentiels décrits ci-dessus dans des formulations de peintures, d'encres ou de cosmétiques.

### Brève description des figures

L'invention sera décrite ci-après de manière plus détaillée à l'aide des dessins annexés, donnés à titre d'exemples nullement limitatifs, dans lesquels :
La figure 1 représente schématiquement les différentes couches du pigment interférentiel selon l'invention.
La figure 2 représente schématiquement les chemins optiques de la lumière au travers du pigment interférentiel selon l'invention.

### Description détaillée de l'invention

La présente invention se rapporte à un pigment interférentiel multicouche comprenant un coeur réalisé dans un métal précieux pur ou allié tel que l'or, l'argent, le platine, le palladium, le ruthénium, le rhodium, l'osmium ou l'iridium. Ces métaux ont un niveau de réflectance supérieur à 70%, voire supérieur à 80 ou encore à 90% dans tout ou partie du spectre visible (380 nm - 780 nm). Les métaux choisis sont, de préférence, le rhodium, l'or, l'argent ou un de leurs alliages et, plus préférentiellement, l'or, l'argent ou un de leurs alliages. L'or présente une réflectance élevée pour les longueurs d'onde supérieures à 550 nm. Il est dès lors privilégié lorsque des couleurs chaudes (rouges, jaunes) sont souhaitées. L'argent, par contre, présente une réflectance élevée sur une gamme du spectre visible plus étendue, ce qui permet également d'obtenir des couleurs bleutées et vertes. Dans le cas d'un alliage, le choix se porte, par exemple, sur un alliage Ag-Pt.

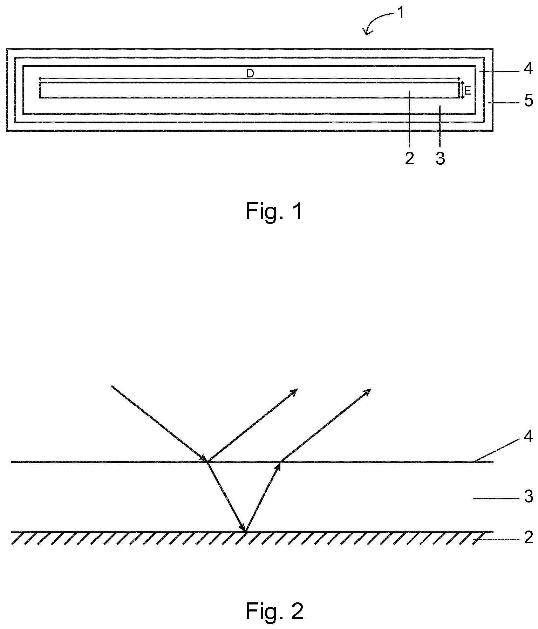

Le pigment 1 selon l'invention représenté à la figure 1 comporte le coeur métallique 2 revêtu d'une première couche 3 d'un matériau diélectrique qui forme le milieu d'interférence, elle-même revêtue d'une deuxième couche 4 d'un matériau métallique, éventuellement revêtue d'une troisième couche 5 de protection.

Le coeur métallique 2 se présente sous forme d'une paillette allongée ayant un diamètre D transversal moyen compris entre 2 et 300 µm, de préférence entre 5 et 100 µm et plus préférentiellement entre 10 et 30 um. Elle a une épaisseur E moyenne comprise 20 et 1000 nm et, de préférence, entre 300 et 500 nm. En général, le facteur de forme des paillettes, c.à.d. le rapport du diamètre transversal moyen à l'épaisseur moyenne, est compris entre 5 et 1000 et, de préférence, entre 10 et 500.

La première couche 3 comporte un matériau diélectrique transparent pouvant, par exemple, être du TiO₂, SiO₂, Al₂O₃, MgF₂, AlN, Ta₂O₅, Si₃N₄, ZnS, ZnO, ZrO₂, Cr₂O₃, CeO₂, Y₂O₃, HfN, HfC, HfO₂, La₂O₃, MgO, Sb₂O₃, SiO, Se₂O₃, SnO₂, ou du WO₃, avec une préférence pour le SiO₂. Cette couche a une épaisseur comprise entre 50 et 500 nm et, de préférence, entre 300 et 400 nm, l'épaisseur et l'indice de réfraction du matériau diélectrique étant sélectionnés en fonction de la couleur d'interférence souhaitée.

La deuxième couche 4 est formée d'un métal ou d'un alliage métallique destiné à réfléchir la lumière à la surface du pigment interférentiel. Le métal est préférentiellement choisi parmi l'argent, l'or, l'aluminium, le titane, le palladium, le platine, le ruthénium, le rhodium, l'osmium, l'iridium, l'étain, le chrome, le fer, le cobalt, le nickel, le cuivre, le zinc, le rhodium et un de leurs alliages. Il est plus préférentiellement choisi parmi l'argent, l'or, l'aluminium, le rhodium et un de leurs alliages. Cette couche a une épaisseur comprise entre 1 et 30 nm et, de préférence, entre 1 et 10 nm. La couche est configurée pour permettre la transmission d'une partie du rayon lumineux incident jusqu'au coeur métallique. Elle est ainsi préférentiellement discontinue, non uniforme, éventuellement constituée de particules. Dans ce dernier cas, les particules sont de préférence disposées à intervalle avec un espace entre particules de l'ordre de quelques nanomètres.

La troisième couche 5 de protection qui est optionnelle est destinée à protéger la deuxième couche métallique de l'oxydation ou de l'usure. Cette couche est de préférence réalisée dans un matériau diélectrique transparent tel que le TiO₂, SiO₂, Al₂O₃, MgF₂, AlN, Ta₂O₅, du Si₃N₄, ZnS, ZnO, ZrO₂, Cr₂O₃, CeO₂, Y₂O₃, HfN, HfC, HfO₂, La₂O₃, MgO, Sb₂O₃, SiO, Se₂O₃, SnO₂, WO₃ ou dans une résine transparente. Cette couche a une épaisseur comprise entre 1 et 30 nm et de préférence entre 1 et 10 nm.

La présente invention n'exclut pas d'introduire des couches intermédiaires entre le coeur métallique et la première couche et/ou entre les première et deuxième couches afin d'augmenter l'adhésion entre les différentes couches constitutives du pigment interférentiel.

Comme schématisé à la figure 2, une partie du rayon lumineux incident est réfléchie sur la couche métallique extérieure 4 tandis qu'une autre partie est transmise et réfléchie sur le coeur métallique 2. La différence de trajectoire entre les deux faisceaux réfléchis crée par effet interférentiel une couleur présentant des nuances en fonction de l'angle d'observation.

Selon l'invention, le coeur métallique peut être fabriqué partant d'une feuille, par exemple d'or ou d'argent, avec les couches extérieures déposées par CVD, PVD, électrochimie ou par voie non électrolytique, le tout étant ultérieurement broyé. Le pigment multicouche peut également être fabriqué partant de paillettes obtenues par chimie en voie humide ou sèche, ou encore par atomisation, éventuellement broyées avant d'être revêtues.

La poudre de pigments ainsi obtenue peut être dispersée dans un milieu approprié fonction de l'application. Elle peut ainsi être utilisée dans des formulations pour peintures, encres, produits cosmétiques et, de manière générale, dans des formulations pour revêtements.

Il est également envisageable d'utiliser la poudre de pigments telle quelle. Dans cette configuration, la poudre préalablement déposée est compactée sur un substrat puis frittée de manière uniforme ou sélective sous l'effet d'un apport local de chaleur par exemple par laser. Il en résulte un revêtement dense couvrant tout ou une partie du substrat. Il est également envisageable de réaliser des pièces massives par compaction et densification de la poudre de pigments. Il est aussi envisageable de réaliser des pièces massives par fabrication additive.

A titre d'exemple, dans le domaine de l'horlogerie, les pigments peuvent être utilisés après dispersion dans un milieu approprié ou comme tels pour revêtir ou décorer une pièce d'habillage (cadran, lunette, carrure, fond, fermoir, ...) ou pour réaliser une pièce d'habillage massive (cadran, aiguille, index, poussoir, etc.).

Pour finir, on précisera que le pigment avec un coeur en or pur et ses différentes couches est titrable à 18 carats. Ainsi, pour un pigment comprenant successivement :
- un coeur en or d'une épaisseur de 400 nm pour un diamètre transversal de 30 µm,
- une première couche d'enrobage de SiO₂ d'une épaisseur de 330 nm,
- une deuxième couche métallique d'enrobage en Ag d'une épaisseur de 5 nm,
- une troisième couche de protection en SiO₂ d'une épaisseur de 10 nm,
le pourcentage massique de l'or est de 79.01%, c.à.d. supérieur au 75% requis pour l'or 18 carats.

Le coeur métallique peut également être réalisé dans d'autres alliages précieux afin d'atteindre des titres légaux comme, par exemple, le Pd500 ou le Pt900.

### Légende des figures

- (1): Pigment interférentiel
- (2): Coeur métallique
- (3): Première couche, aussi appelée couche diélectrique
- (4): Deuxième couche, aussi appelée couche métallique
- (5): Troisième couche, aussi appelée couche de protection

- D :: Diamètre transversal du coeur métallique formant une paillette
- E :: Epaisseur du coeur métallique formant une paillette

## Revendications

1. Pigment interférentiel (1) multicouche comprenant successivement :
- un coeur métallique (2) sous forme d'une paillette, le coeur métallique (2) comprenant un matériau choisi parmi l'or, l'argent, le palladium, le rhodium, le ruthénium, le platine, l'osmium, l'iridium et un de leurs alliages;
- une première couche (3) d'un matériau diélectrique transparent ;
- une deuxième couche (4) métallique.

2. Pigment selon la revendication 1, dans lequel le coeur métallique (2) comprend un matériau choisi parmi l'or, l'argent, le rhodium et un de leurs alliages et, plus préférentiellement, choisi parmi l'or, l'argent et un de leurs alliages.

3. Pigment selon la revendication 1 ou 2, comprenant une troisième couche (5) de protection formée d'un matériau diélectrique transparent ou d'une résine transparente.

4. Pigment selon l'une quelconque des revendications précédentes, dans lequel le matériau diélectrique de la première couche (3) et de la troisième couche (5) est choisi parmi le TiO₂, SiO₂, Al₂O₃, MgF₂, AlN, Ta₂O₅, Si₃N₄ ZnS, ZnO, ZrO₂, Cr₂O₃, CeO₂, Y₂O₃, HfN, HfC, HfO₂, La₂O₃, MgO, Sb₂O₃, SiO, Se₂O₃, SnO₂ et le WO₃.

5. Pigment selon l'une quelconque des revendications précédentes, dans lequel la deuxième couche (4) métallique comprend un matériau choisi parmi l'argent, l'or, l'aluminium, le titane, le palladium, le platine, le ruthénium, le rhodium, l'osmium, l'iridium, l'étain, le chrome, le fer, le cobalt, le nickel, le cuivre, le zinc, le rhodium et un de leurs alliages.

6. Pigment selon l'une quelconque des revendications précédentes, dans lequel le coeur métallique (2) a un diamètre transversal moyen compris entre 2 et 300 µm, de préférence entre 5 et 100 µm et plus préférentiellement entre 10 et 30 µm, et une épaisseur moyenne comprise 20 et 1000 nm et, de préférence, entre 300 et 500 nm.

7. Pigment selon l'une quelconque des revendications précédentes, dans lequel la première couche (3) a une épaisseur comprise entre 50 et 500 nm et, de préférence, entre 300 et 400 nm.

8. Pigment selon l'une quelconque des revendications précédentes, dans lequel la deuxième couche (4) et la troisième couche (5) ont une épaisseur comprise entre 1 et 30 nm et, de préférence, entre 1 et 10 nm.

9. Pigment selon l'une quelconque des revendications précédentes, dans lequel la deuxième couche (4) est discontinue.

10. Pigment selon l'une quelconque des revendications précédentes, dans lequel la deuxième couche (4) se présente sous forme de particules disposées à intervalle.

11. Pièce et, en particulier pièce d'habillage, pour l'horlogerie ou la bijouterie comprenant des pigments interférentiels selon l'une quelconque des revendications précédentes.

12. Pièce selon la revendication 11, comportant un revêtement comprenant des pigments interférentiels.

13. Pièce selon la revendication 11, comprenant en masse des pigments interférentiels.

14. Montre ou bijou comprenant la pièce selon l'une quelconque des revendications 11 à 13.

15. Utilisation de pigments interférentiels (1) selon l'une quelconque des revendications 1 à 10 dans des formulations de peintures, d'encres ou de cosmétiques.
